# EUROPEAN PATENT APPLICATION

(11) **EP 2 255 874 A2**
(43) Date of publication of application: **01.12.2010**
(21) Application number: 10250993.2
(22) Date of filing: 28.05.2010
(51) Int. Cl.: B01J 21/06, B01J 23/30, B01J 23/652, B01J 23/888, B01J 35/00, B01J 35/02, B01J 37/00, B01J 37/34, B01J 35/10

(54) **Photocatalyst dispersion liquid and photocatalyst functional product using the same**

(30) Priority: 29.05.2009 JP 2009130144; 16.09.2009 JP 2009214931
(71) Applicant: Sumitomo Chemical Company, Limited, Tokyo 104-8260 (JP)
(72) Inventor: Sogabe, Kohei, Niihama-shi Ehime 792-0009 (JP); Okusako, Kensen, Niihama-shi Ehime 792-0831 (JP); Sakatani, Yoshiaki, Niihama-shi Ehime 792-0025 (JP)
(74) Representative: Duckworth, Timothy John

(57) **Abstract**

The present invention provides a photocatalyst dispersion liquid comprising titanium oxide particles which are obtained by a sulfate process and having a content of sulfuric acid in terms of elemental sulfur of 1000 ppm or less, tungsten oxide particles, and a dispersion medium for dispersing these particles, wherein the mass ratio of the titanium oxide particles to the tungsten oxide particles is 1:8 to 8:1. The invention further provides a photocatalyst functional product comprising a photocatalyst layer formed using the photocatalyst dispersion liquid and a method for preparing the photocatalyst dispersion liquid.

## Description

### BACKGROUND

### 1. Technical Field

The present invention relates to a photocatalyst dispersion liquid containing a titanium oxide particle and a tungsten oxide particle.

### 2. Description of Related Art

When a semiconductor is irradiated with light having energy higher than its band gap, electrons in the valence band are excited to the conduction band, holes are generated in the valence band, and electrons are generated in the conduction band. Since the holes and the electrons have strong oxidizing power and strong reducing power, respectively, they exhibit an oxidation-reduction reaction for a substance making contact with the semiconductor. The oxidation-reduction reaction is referred to as a photocatalytic activity, and a semiconductor capable of exhibiting the photocatalytic activity is referred to as a photocatalyst. Examples of such a photocatalyst include a titanium oxide particle and a tungsten oxide particle. It is known that when such particles are used so as to make contact with each other, a synergetic effect in light excitation is produced and the photocatalytic activity is enhanced (Japanese Patent Application Laid-open No. 2003-265954).

### SUMMARY

However, titanium oxide particles and tungsten oxide particles are usually dispersed individually in a dispersion medium, and each of the obtained liquids is merely used as an individual photocatalyst dispersion liquid to form an individual photocatalyst layer. A photocatalyst dispersion liquid in which titanium oxide particles and tungsten oxide particles exist together has not yet been obtained. The reason for this is that even if titanium oxide particles and tungsten oxide particles are dispersed in a dispersion medium, the titanium oxide particles and the tungsten oxide particles coagulate with each other due to the difference in the isoelectric points of the titanium oxide particles and the tungsten oxide particles, whereby there arises a disadvantage of easily causing solid-liquid separation.

Hence, in a mixture of titanium oxide particles and tungsten oxide particles, the particles are usually dispersed in sol, and the sol is used as photocatalyst dispersion sol to form a photocatalyst layer. For example, photocatalyst dispersion sol in which titanium oxide particles and tungsten oxide particles are dispersed has been disclosed (Japanese Patent Application Laid-open No. 2005-231935).

By coating the photocatalyst dispersion sol on a surface of a base material, a photocatalyst layer containing the titanium oxide particles and the tungsten oxide particles and exhibiting the photocatalytic activity can be formed on the surface of the base material. However, the photocatalyst dispersion sol is high in thixotropy. Hence, for example, when the dispersion sol is coated on the base material to form a photocatalyst layer, a proper film cannot be formed, whereby there causes a problem in which a sufficient photocatalytic activity cannot be attained.

Accordingly, an object of the present invention is to provide a photocatalyst dispersion liquid in which coagulation of particles is prevented and solid-liquid separation hardly occurs.

The present inventors have studied intensively to solve the above-mentioned problems. As a result, the inventors have found that coagulation of particles is prevented and no thixotropy is observed in a dispersion liquid wherein titanium oxide particles in which the content of sulfuric acid in terms of elemental sulfur is 1000 ppm or less by dry weight and tungsten oxide particles are dispersed in a dispersion medium. The present invention has been completed on the basis of these findings.

More specifically, the present invention provides the following:
(1) A photocatalyst dispersion liquid, comprising at least a titanium oxide particle which is obtained by a sulfate process and in which the content of sulfuric acid in terms of elemental sulfur is 1000 ppm or less by dry weight, a tungsten oxide particle, and a dispersion medium for dispersing the titanium oxide particle and the tungsten oxide particle, wherein a content ratio of the titanium oxide particle to the tungsten oxide particle is 1:8 to 8:1 by mass ratio.
(2) The photocatalyst dispersion liquid set forth in the above-mentioned item (1), wherein the titanium oxide particle is a metatitanic acid particle.
(3) The photocatalyst dispersion liquid set forth in the above-mentioned item (1) or (2), further comprising an electron-withdrawing substance or its precursor.
(4) The photocatalyst dispersion liquid set forth in the above-mentioned item (3), wherein light is irradiated to the precursor.
(5) The photocatalyst dispersion liquid set forth in the above-mentioned item (3) or (4), wherein the electron-withdrawing substance or its precursor is one or more kinds of metals selected from the group consisting of Cu, Pt, Au, Pd, Ag, Fe, Nb, Ru, Ir, Rh and Co or a compound thereof.
(6) A photocatalyst functional product, comprising a photocatalyst layer formed on the surface thereof using the photocatalyst dispersion liquid set forth in any one of the above-mentioned items (1) to (5).

With the present invention, it is possible to obtain a photocatalyst dispersion liquid in which coagulation of particles is prevented and solid-liquid separation hardly occurs. Hence, with the photocatalyst dispersion liquid, it is possible to easily form a photocatalyst layer exhibiting a strong photocatalytic activity without containing a dispersing agent or the like.

The above and further objects and features will more fully be apparent from the following detailed description.

### DETAILED DESCRIPTION

### (Photocatalyst dispersion liquid)

A photocatalyst dispersion liquid according to the present invention is obtained by dispersing titanium oxide particles and tungsten oxide particles, serving as photocatalysts exhibiting photocatalytic activities, in a dispersion medium. The content of sulfuric acid in terms of elemental sulfur in the titanium oxide particles is 1000 ppm or less. The sulfuric acid usually exists as a sulfate ion, for example, in the spaces between the particles. When the content of sulfuric acid in terms of elemental sulfur is more than 1000 ppm, the sulfate ion acts as an aggregating agent, for example, and the viscosity of the obtained photocatalyst dispersion liquid becomes high, and the photocatalyst dispersion liquid exhibits thixotropy, whereby the diameter of the dispersed particles increases and it becomes difficult to handle the particles.

Titanium oxide particles according to the present invention are not limited particularly, provided that they are particulate titanium oxide exhibiting a photocatalytic activity. Examples of the titanium oxide particles include metatitanic acid particles and titanium dioxide [TiO₂] particles having a crystal form such as anatase, brookite or rutile. The titanium oxide particles may be used individually or in a combination of two or more kinds. However, it is particularly preferable to use metatitanic acid particles among the above-mentioned particles.

Metatitanic acid particles to be used as the titanium oxide particles according to the present invention can be obtained using a method described below, for example.

There is a method of heating and dissolving titanium ore, ilmenite ore, natural rutile, etc. in concentrated sulfuric acid so as to obtain reaction mixture containing titanium sulfate, and heating and hydrolyzing the reaction mixture. Since the reaction mixture obtained after the heating and hydrolysis is usually in a slurry state, metatitanic acid particles can be isolated by filtering the reaction mixture having been subjected to the heating and hydrolysis. At this stage, the content of sulfuric acid in terms of elemental sulfur is usually approximately 1 to 3% by dry weight. The obtained metatitanic acid particles are alkalified by adding the particles to an aqueous solution of sodium hydroxide or the like, the sulfuric acid is washed out, and the metatitanic acid particles are filtered off. At the time of the filtering, the metatitanic acid particles may be neutralized by adding nitric acid thereto. With the neutralization, the filtering operation can be made easy. The metatitanic acid particles obtained by the filtering are usually washed with pure water or the like. At this stage, the content of sulfuric acid in terms of elemental sulfur is usually approximately 1200 to 2000 ppm by dry weight. For the purpose of decreasing the content of sulfuric acid in terms of elemental sulfur to 1000 ppm or less by dry weight, the metatitanic acid particles are alkalified once again by adding the particles to an aqueous solution of sodium hydroxide or the like, the sulfuric acid is washed out, and the metatitanic acid particles are filtered off. At the time of the filtering, the metatitanic acid particles may be neutralized by adding nitric acid thereto. With the neutralization, the filtering operation can be made easy. The metatitanic acid particles obtained by the filtering are usually washed with pure water or the like. The content of sulfuric acid in terms of elemental sulfur in the metatitanic acid particles obtained as described above is usually 1000 ppm or less by dry weight.

Titanium dioxide particles to be used as the titanium oxide particles according to the present invention can be obtained by calcining the metatitanic acid particles obtained as described above. The titanium dioxide particles to be obtained can be converted into a desired crystal form, such as anatase, brookite or rutile by adjusting the calcination temperature and calcination time at the time of the calcination.

It is preferable that metatitanic acid particles are used as the titanium oxide particles according to the present invention. Since the surface area of the metatitanic acid particles is larger than that of the other particles, the metatitanic acid particles are excellent in the performance of adsorbing the reactants of volatile organic compounds, such as acetaldehyde or formaldehyde. In addition, since the metatitanic acid particles are fine particles, they are easily dispersed by dispersion treatment using a bead mill or the like, and damage to the crystals thereof can be decreased. Hence, the weakening of the photocatalytic activity due to the dispersion treatment can be reduced, and the particles are easily pulverized finely by the dispersion treatment. Furthermore, a synergetic effect in photoexcitation is produced by using the titanium oxide particles such that the titanium oxide particles are supported on or made contact with the surface of the tungsten oxide particles. As a result, it is possible to obtain a photocatalytic activity stronger than that obtained conventionally.

The BET specific surface area of the titanium oxide particles is preferably 40 to 500 m²/g, and further preferably 250 to 400 m²/g, from the viewpoints of photocatalytic activity and dispersibility.

Tungsten oxide particles according to the present invention are not particularly limited, provided that the tungsten oxide particles are particulate tungsten oxide exhibiting a photocatalytic activity. Examples of the tungsten oxide particles include tungsten trioxide [WO₃] particles. The tungsten oxide particles may be used individually or in a combination of two or more kinds.

Tungsten trioxide particles can be obtained using, for example, (i) a method of adding acid to an aqueous solution of tungstate so as to obtain tungstic acid as sediment and calcining the obtained tungstic acid, (ii) a method of heating ammonium metatungstate or ammonium paratungstate so as to cause thermal decomposition.

The BET specific surface area of the tungsten oxide particles is preferably 2 to 100 m²/g, and further preferably 5 to 50 m²/g, from the viewpoint of photocatalytic activity.

The average dispersed particle diameter of the particles (titanium oxide particles and tungsten oxide particles) contained in the photocatalyst dispersion liquid according to the present invention is 50 nm to 3 µm, preferably 60 to 500 nm, and further preferably 80 to 150 nm, from the viewpoint of dispersion.

Regarding the photocatalyst dispersion liquid according to the present invention, the content ratio of the titanium oxide particles to the tungsten oxide particles (titanium oxide particles : tungsten oxide particles)is 1:8 to 8:1, preferably 2:3 to 3:2, by mass ratio.

The dispersion medium of the photocatalyst dispersion liquid according to the present invention is not limited particularly, provided that the titanium oxide particles and the tungsten oxide particles can be dispersed. Usually, an aqueous solvent mainly containing water is used. More specifically, the dispersion medium may be only water or may be a mixed solvent containing water and an aqueous organic solvent. When using a mixed solvent containing water and an aqueous organic solvent, the content of the water is preferably 50 % by mass or more. Examples of the aqueous organic solvent include aqueous alcohol solvents, such as methanol, ethanol, propanol or butanol, acetone and methyl ethyl ketone. The dispersion medium may be used individually or in a combination of two or more kinds.

The content of the dispersion medium is usually 5 to 200 times by mass, or preferably 10 to 100 times by mass, of the total of the titanium oxide particles and the tungsten oxide particles. In the case that the content of the dispersion medium is less than 5 times by mass of the total of the particles, the titanium oxide particles and the tungsten oxide particles are apt to settle easily. On the other hand, in the case that the content of the dispersion medium is more than 200 times by mass of the total of the particles, the dispersion medium becomes disadvantageous in volume efficiency, whereby both of these cases are undesirable.

It is preferable that the photocatalyst dispersion liquid according to the present invention also contains an electron-withdrawing (electron capture) substance or its precursor. The electron-withdrawing substance is a compound supported on the surfaces of the photocatalysts (i.e., titanium oxide particles and tungsten oxide particles) so as to be able to exert electron-withdrawing property. The precursor of the electron-withdrawing substance is a compound that can be changed to the electron-withdrawing substance on the surface of the photocatalyst (for example, a compound that can be reduced to the electron-withdrawing substance by virtue of the irradiation of light). When the electron-withdrawing substance exists while being supported on the surface of the photocatalyst, the recombination of the electrons excited to the conduction band by virtue of the irradiation of light with the holes generated in the valence band is prevented, whereby the photocatalytic activity can be enhanced further.

The electron-withdrawing substance or its precursor is preferably one or more kinds of metals selected from the group consisting of Cu, Pt, Au, Pd, Ag, Fe, Nb, Ru, Ir, Rh and Co or a compound thereof, and further preferably, one or more kinds of metals selected from the group consisting of Cu, Pt, Au and Pd or a compound thereof. Examples of the electron-withdrawing substance include the above-mentioned metals and their compounds, such as their oxides or hydroxides. Examples of the precursor of the electron-withdrawing substance include the nitrates, sulfates, halides, organic acid salts, carbonates and phosphates of the above-mentioned metals.

Preferable specific examples of the electron-withdrawing substance include metals, such as Cu, Pt, Au or Pd. Furthermore, preferable specific examples of the precursor of the electron-withdrawing substance are described below. Examples of the precursor containing Cu include copper nitrate [Cu(NO₃)₂], copper sulfate [CuSO₄], copper chloride [CuCl₂, CuCl], copper bromide [CuBr₂, CuBr], copper iodide [CuI], copper iodate [CuI₂O₆], copper ammonium chloride [Cu(NH₄)₂Cl₄], copper oxychloride [Cu₂Cl(OH)₃], copper acetate [CH₃COOCU, (CH₃COO)₂Cu], copper formate [(HCOO)₂Cu], copper carbonate [CᵤCO₃], copper oxalate [CᵤC₂O₄], copper citrate [Cu₂C₆H₄O₇] and copper phosphate [CuPO₄]. Examples of the precursor containing Pt include platinum chloride [PtCl₂, PtCl₄], platinum bromide [PtBr₂, PtBr₄], platinum iodide [PtI₂, PtI₄], potassium chloroplatinate [K₂(PtCl₄)], hexachloro platinate [H₂PtCl₆], platinum sulfite [H₃Pt(SO₃)₂OH], platinum oxide [PtO₂], tetraammine platinum chloride [Pt(NH₃)₄Cl₂], tetraammine platinum hydrogencarbonate [C₂H₁₄N₄O₆Pt], tetraammine platinum hydrogenphosphate [Pt(NH₃)₄HPO₄], tetraammine platinum hydroxide [Pt(NH₃)₄(OH)₂], tetraammine platinum nitrate [Pt(NO₃)₂(NH₃)₄], tetraammine platinum tetrachloro platinum [Pt(NH₃)₄)(PtCl₄)] and dinitrodiamine platinum [Pt(NO₂)₂(NH₃)₂]. Examples of the precursor containing Au include gold chloride [AuCl], gold bromide [AuBr], gold iodide [AuI], gold hydroxide [Au(OH)₂], tetrachloro aurate [HAuCl₄], potassium tetrachloro aurate [KAuCl₄], potassium tetrabromo aurate [KAuBr₄] and gold oxide [Au₂O₃]. Examples of the precursor containing Pd include palladium acetate [(CH₃COO)₂Pd], palladium chloride [PdCl₂], palladium bromide [PdBr₂], palladium iodide [PdI₂], palladium hydroxide [Pd(OH)₂], palladium nitrate [Pd(NO₃)₂], palladium oxide [PdO], palladium sulfate [PdSO₄], potassium tetrachloro palladate [K₂(PdCl₄)], potassium tetrabromo palladate [K₂(PdBr₄)], tetraammine palladium chloride [Pd(NH₃)₄Cl₂], tetraammine palladium bromide [Pd(NH₃)₄Br₂], tetraammine palladium nitrate [Pd(NH₃)₄(NO₃)₂], tetraammine palladium (II) tetrachloro palladate (II) [(Pd(NH₃)₄)(PdCl₄)] and ammonium tetrachloro palladate

[(NH₄)₂PdCl₄]. The electron-withdrawing substance or its precursor may be used individually or in a combination of two or more kinds. Furthermore, one or more kinds of electron-withdrawing substances and one or more kinds of precursors may also be used in combination as a matter of course.

When the electron-withdrawing substance or its precursor is contained in the photocatalyst dispersion liquid according to the present invention, the content thereof is usually 0.005 to 0.6 parts by mass, or preferably 0.01 to 0.4 parts by mass, in the 100 parts by mass of the total of the titanium oxide particles and the tungsten oxide particles in terms of metal atom. In the case that the content of the electron-withdrawing substance or its precursor is less than 0.005 parts by mass in the 100 parts by mass of the total of the particles, the effect of enhancing the photocatalytic activity using the electron-withdrawing substance may not be obtained sufficiently. On the other hand, in the case that the content is more than 0.6 parts by mass, the photocatalytic activity may become weak instead of being enhanced.

The photocatalyst dispersion liquid according to the present invention may contain various kinds of conventionally known additives within the range of not impairing the effect of the present invention. Such an additive may be used individually or in a combination of two or more kinds.

Examples of the additives include those added to enhance the photocatalytic activity. Specific examples of the additives intended to enhance the photocatalytic activity include silicon compounds, such as amorphous silica, silica sol, water glass or organopolysiloxane; aluminum compounds, such as amorphous alumina, alumina sol or aluminum hydroxide; aluminosilicates, such as zeolite or kaolinite; alkaline earth metal oxides or alkaline earth metal hydroxides, such as magnesium oxide, calcium oxide, strontium oxide, barium oxide, magnesium hydroxide, calcium hydroxide, strontium hydroxide or barium hydroxide; and calcium phosphate, molecular sieve, activated carbon, polycondensated organo polysiloxane compound, phosphate, fluoropolymer, silicon polymer, acrylic resin, polyester resin, melamine resin, urethane resin and alkyd resin.

Furthermore, as the additive, a binder or the like for supporting the photocatalyst (the titanium oxide particles and the tungsten oxide particles) more firmly on the surface of the base material can also be used when the photocatalyst dispersion liquid is coated on the surface of the base material (refer to, for example, Japanese Patent Application Laid-open No. H8-67835 (1996), Japanese Patent Application Laid-open No. H9-25437 (1997), Japanese Patent Application Laid-open No. H10-183061 (1998), Japanese Patent Application Laid-open No. H10-183062 (1998), Japanese Patent Application Laid-open No. H10-168349 (1998), Japanese Patent Application Laid-open No. H10-225658 (1998), Japanese Patent Application Laid-open No. H11-1620 (1999), Japanese Patent Application Laid-open No. H11-1661 (1999), Japanese Patent Application Laid-open No. 2004-059686, Japanese Patent Application Laid-open No. 2004-107381, Japanese Patent Application Laid-open No. 2004-256590, Japanese Patent Application Laid-open No. 2004-359902, Japanese Patent Application Laid-open No. 2005-113028, Japanese Patent Application Laid-open No. 2005-230661 and Japanese Patent Application Laid-open No. 2007-161824).

The hydrogen ion concentration of the photocatalyst dispersion liquid according to the present invention is usually pH 2 to 7, preferably pH 3 to 6. In the case that the hydrogen ion concentration is less than pH 2, the liquid is too acidic and inconvenient to handle. On the other hand, in the case that the hydrogen ion concentration is more than pH 7, the tungsten oxide particles may dissolve. Hence, both of the cases are undesirable. The hydrogen ion concentration pH of the photocatalyst dispersion liquid should only be adjusted usually by adding an acid thereto. Examples of the acid that can be used to adjust the hydrogen ion concentration pH include nitric acid, hydrochloric acid, sulfuric acid, phosphoric acid, formic acid, acetic acid and oxalic acid.

### (Method of preparing photocatalyst dispersion liquid)

The photocatalyst dispersion liquid according to the present invention is prepared by dispersing titanium oxide particles and tungsten oxide particles in a dispersion medium. The dispersion of the titanium oxide particles and the tungsten oxide particles is carried out by a dispersion treatment after mixing both of the particles. Conventionally known methods, such as a method of using a medium stirring disperser, can be adopted for the dispersion treatment.

When the titanium oxide particles are mixed with the tungsten oxide particles, the use amounts of both are adjusted so that the ratio of the titanium oxide particles to the tungsten oxide particles is 1:8 to 8:1, preferably 2:3 to 3:2, by mass ratio.

The method of preparing the photocatalyst dispersion liquid according to the present invention preferably includes a step of adding an electron-withdrawing substance or its precursor. The electron-withdrawing substance or its precursor may be added to a dispersion liquid in which the titanium oxide particles have been dispersed in advance, to a dispersion liquid in which the tungsten oxide particles have been dispersed in advance, or to a dispersion liquid in which the titanium oxide particles and the tungsten oxide particles have been dispersed.

When the electron-withdrawing substance or its precursor is added, the amount of the addition should only be determined so that the content of the electron-withdrawing substance or its precursor in the photocatalyst dispersion liquid obtained finally is in the range described above in the item of (Photocatalyst dispersion liquid).

When the precursor of the electron-withdrawing substance is added, it is preferable that light is irradiated after the addition. The light to be irradiated is not limited particularly, and visible light or ultraviolet light may be used. When light is irradiated, the precursor is reduced by the electrons generated by light excitation and converted into the electron-withdrawing substance, and the electron-withdrawing substance is supported on the surface of the photocatalyst particles (the titanium oxide particles and the tungsten oxide particles). Even if light is not irradiated when the precursor is added, the precursor is converted into the electron-withdrawing substance when light is irradiated to the photocatalyst layer formed by the obtained photocatalyst dispersion liquid. Hence, the photocatalytic activity thereof is not impaired.

The irradiation of light may be carried out at any stage, provided that the irradiation is carried out after the addition of the precursor of the electron-withdrawing substance.

Furthermore, when the precursor of the electron-withdrawing substance was added, methanol, ethanol, or oxalic acid, etc. can also be added as necessary before the irradiation of light within the range of not impairing the effect of the present invention in order to obtain the electron-withdrawing substance more efficiently.

In the method of preparing the photocatalyst dispersion liquid according to the present invention, the various kinds of additives described in the item of (Photocatalyst dispersion liquid) can also be added. In that case, the additives may be added at any stage. However, the addition is preferably performed, for example, after the titanium oxide particle dispersion liquid is mixed with the tungsten oxide particle dispersion liquid or after the titanium oxide particle dispersion liquid is mixed with the tungsten oxide particles.

### (Photocatalyst functional product)

A photocatalyst functional product according to the present invention is provided with the photocatalyst layer formed using the photocatalyst dispersion liquid according to the present invention on the surface thereof. The photocatalyst layer is formed of a photocatalyst exhibiting a photocatalytic activity, that is, titanium oxide particles and tungsten oxide particles. When the photocatalyst dispersion liquid according to the present invention contains an electron-withdrawing substance or its precursor, the electron-withdrawing substance or its precursor are supported on the surfaces of the titanium oxide particles and the tungsten oxide particles. The supported precursor is changed to the electron-withdrawing substance when light is irradiated to the photocatalyst layer, for example.

The photocatalyst layer can be formed, for example, using a conventionally known film formation method of coating the photocatalyst dispersion liquid according to the present invention on the surface of a base material (product) and then volatizing the dispersion medium. The film thickness of the photocatalyst layer is not limited particularly and should only be set appropriately, usually to several hundred nm to several mm, depending on the intended use or the like. The photocatalyst layer may be formed on any portion of the inner surface or the outer surface of the base material (product). However, it is preferable that the photocatalyst layer is formed on a face to which light (visible light) is irradiated and to which a site from which malodorous substances are generated is spatially connected continuously or intermittently. The material of the base material (product) is not limited particularly, provided that the photocatalyst layer to be formed can be supported by the material at a practically sufficient strength. Examples of the base material include plastic, metal, ceramic, wood, concrete and paper, whereby all kinds of materials can be used for the product.

Specific examples of the photocatalyst functional product according to the present invention include construction materials, such as ceiling materials, tiles, glass, wall paper, wall materials or floor materials; automobile interior materials (automobile instrument panels, automobile sheets and automobile ceiling materials); household electric appliances, such as refrigerators or air conditioners; and textile products, such as clothes or curtains.

The photocatalyst functional product according to the present invention exhibits a strong catalytic action by virtue of the irradiation of light, not only in outdoor areas but also in indoor as wherein only the light from a visible light source, such as a fluorescent lamp or a sodium lamp, is received. Hence, for example, when the photocatalyst dispersion liquid according to the present invention is coated on the ceiling materials, tiles, glass, etc. of a hospital and dried, by virtue of light irradiation from indoor illumination, the concentrations of volatile organic compounds, such as formaldehyde and acetaldehyde, malodorous substances, such as aldehydes, mercaptans and ammonia, and nitrogen oxides can be decreased, and furthermore, disease-causing bacteria, such as Staphylococcus aureus, Escherichia coli, anthrax, Bacillus tuberculosis, Vibrio cholerae, Corynebacterium diphtheriae, Clostridium tetani, Yersinia pestis, Bacillus dysenteriae, Clostridium botulinum and Legionella, and viruses, such as influenza viruses and noroviruses, can be destroyed, decomposed and eliminated.

### [Examples]

Although the present invention will be described below in detail with reference to examples, the present invention is not limited to these examples.

The following methods were used to measure various physical properties in examples and comparison examples and to evaluate their photocatalytic activities.

### <Crystal form>

An X-ray diffraction spectrum was measured using an X-ray diffraction apparatus ("RINT 200/PC" manufactured by Rigaku Co., Ltd.) so as to determine a crystal form from the spectrum.

### <BET specific surface area>

A BET specific surface area was measured by a nitrogen adsorption method using a specific surface area measuring instrument ("Monosorb" manufactured by Yuasa Ionics Inc.).

### <Determination of content of sulfuric acid in terms of elemental sulfur>

An emission spectrum was measured using an ICP emission spectrometer ["i CAP6500 Duo View" manufactured by Thermo Fisher Scientific Inc.] so as to analyze the content of sulfuric acid in terms of elemental sulfur included in titanium oxide from the spectrum.

### <Average dispersed particle diameter>

Particle size distribution was measured using a submicron particle size distribution measuring instrument ("N4Plus" manufactured by Coulter Inc.), and a monodispersive mode analysis was made automatically by software included attached to the instrument so as to obtain an average dispersed particle diameter (nm) as a result.

### <Evaluation of photocatalytic activity: decomposition of acetaldehyde>

The photocatalytic activity was evaluated by measuring a first-order reaction rate constant in the decomposition reaction of acetaldehyde under the irradiation of light from a fluorescent lamp.

First, a sample for photocatalytic activity measurement was prepared. More specifically, the obtained photocatalyst dispersion liquid was dripped in a glass petri dish (outer diameter 70 mm, inner diameter 66 mm, height 14 mm, capacity approximately 48 mL) so that the dripping amount of the liquid in terms of solid per unit area of the bottom face of the petri dish was 1 g/m² and so that the dripped liquid was distributed uniformly over the entire bottom face of the petri dish. Next, a photocatalyst layer was formed on the bottom face of the glass petri dish by drying the liquid for 1 hour under an atmosphere in a dryer at 110°C. A sample for photocatalytic activity measurement was obtained by irradiating an ultraviolet light from a black light to the photocatalyst layer for 16 hours so as to have the ultraviolet light strength of 2 mW/cm².

Next, the decomposing reaction of acetaldehyde was carried out by taking the obtained sample for photocatalytic activity measurement together with the petri dish into a gas bag (inner capacity 1 L), sealing the gas bag, making the inside of the gas bag to be a vacuum state, enclosing a mixed gas of 600 mL in which a volume ratio of oxygen to nitrogen was 1:4 in the gas bag, enclosing a nitrogen gas of 3 mL containing acetaldehyde by 1 volume % in the gas bag, keeping it in a dark space at a room temperature for 1 hour, and irradiating the light of the fluorescent lamp from the outside of the gas bag so that an illuminance near the measuring sample from a commercial white fluorescent light as a light source was to be 1,000 lux (measured using an illuminometer "T-10" manufactured by Minolta Co., Ltd.). At this time, the strength of the ultraviolet light near the measurement sample was 6.5 µW/cm² (measured by using an ultraviolet intensity meter "UVR-2" manufactured by Topcon Corporation in which a light receiving part "UD-36" manufactured by the same corporation was attached to the meter). The concentration of the acetaldehyde was measured using a gas chromatograph ("GC-14A" manufactured by Shimadzu Corporation) by sampling the gas inside the gas bag every 1.5 hours after the start of the irradiation of light from the fluorescent lamp. Then, the first-order reaction rate constant was calculated from the concentration of the acetaldehyde with respect to the irradiation time, and the calculated first-order reaction rate constant was evaluated as acetaldehyde decomposition activity. It can be said that as the first-order reaction rate constant is larger, the acetaldehyde decomposition activity (that is, the photocatalytic activity) is stronger.

### <Evaluation of photocatalytic activity: decomposition of formaldehyde>

The photocatalytic activity was evaluated by measuring a first-order reaction rate constant in the decomposition reaction of formaldehyde under the irradiation of light from a fluorescent lamp.

First, a sample for photocatalytic activity measurement was prepared. More specifically, the obtained photocatalyst dispersion liquid was dripped in a glass petri dish (outer diameter 70 mm, inner diameter 66 mm, height 14 mm, capacity approximately 48 mL) so that the dripping amount of the liquid in terms of solid per unit area of the bottom face of the petri dish was 1 g/m² and so that the dripped liquid was distributed uniformly over the entire bottom face of the petri dish. Next, a photocatalyst layer was formed on the bottom face of the glass petri dish by drying the liquid for 1 hour under an atmosphere in a dryer at 110°C. A sample for photocatalytic activity measurement was obtained by irradiating an ultraviolet light from a black light to the photocatalyst layer for 16 hours so as to have the ultraviolet light strength of 2 mW/cm².

Next, the decomposing reaction of formaldehyde was carried out by taking the obtained sample for photocatalytic activity measurement together with the petri dish into a gas bag (inner capacity 1 L), sealing the gas bag, making the inside of the gas bag to be a vacuum state, enclosing a mixed gas of 0.3L in which a volume ratio of oxygen to nitrogen was 2:3 at approximately 100% relative humidity in the gas bag, enclosing 0.3 L of nitrogen gas containing formaldehyde at a concentration of 100 ppm in the gas bag, keeping it in a dark space at a room temperature for 30 minutes, and irradiating the light of the fluorescent lamp from the outside of the gas bag so that an illuminance near the measuring sample from a commercial white fluorescent light as a light source was to be 6,000 lux (measured using an illuminometer "T-10" manufactured by Minolta Co., Ltd.). At this time, the strength of the ultraviolet light near the measurement sample was 40 µW/cm² (measured by using an ultraviolet intensity meter "UVR-2" manufactured by Topcon Corporation in which a light receiving part "UD-36" manufactured by the same corporation was attached to the meter). The concentration of the formaldehyde was measured using a gas chromatograph ("Agilent 3000 Micro GC" manufactured by Agilent Technology Inc.) by sampling the gas inside the gas bag every 10 minutes after the start of the irradiation of light from the fluorescent lamp. Then, the first-order reaction rate constant was calculated from the concentration of the formaldehyde with respect to the irradiation time, and the calculated first-order reaction rate constant was evaluated as formaldehyde decomposition activity. It can be said that as the first-order reaction rate constant is larger, the formaldehyde decomposition activity (that is, the photocatalytic activity) is stronger.

### <Thixotropy>

Thixotropy is evaluated by measuring viscosity using a Brookfield viscometer ["Model BL" manufactured by Tokimec Inc.]. Approximately 100 ml of a metatitanic acid particle dispersion liquid was poured into a 110 ml sample bottle, and adjustment was made so that the metatitanic acid particle dispersion liquid reached the upper face of the rotor installed in the Brookfield viscometer. The measurement was performed in an environment where the temperature of the dispersion liquid was 25 ± 1°C.

When the viscosity value obtained as described above was not more than 100 mPa ·sec, it was evaluated that there was no thixotropy.

### (Example 1)

While the stirring speed of a reactor having an internal capacity of 25 L and equipped with a stirrer was maintained at a constant value of 159 rpm, 2.5 L of pure water and 400 g of a 25 wt% aqueous solution of sodium hydroxide, serving as dispersion media, were added to the reactor. Furthermore, 6500 g (dry weight: 1600 g) of metatitanic acid in a slurry state obtained by hydrolyzing titanium sulfate was added and the mixture was stirred for approximately 1 minute. At this time, the pH of the mixture was 6.3, and the temperature inside the reactor was the same as the room temperature. Then, the temperature inside the reactor was raised to 40°C.

A pH controller installed in advance in the reactor was operated at this time. The pH controller adjusts pH by supplying a 25 wt% aqueous solution of sodium hydroxide and a 68 wt% aqueous solution of nitric acid.

First, the pH set value of the pH controller was set to 9.8, and 380 g of the 25 wt% aqueous solution of sodium hydroxide was supplied for 10 minutes, and this state was maintained for 4 hours.

Next, the pH set value of the pH controller was set to 6.1, and 170 g of the 68 wt% aqueous solution of nitric acid was supplied for 30 minutes, and this state was maintained for 1 hour. As a result, metatitanic acid in a washed slurry state was obtained.

The obtained metatitanic acid in a desulfurized slurry state was supplied to a centrifugal dehydrator ["Compact Centrifugal Separator H-122" manufactured by Kokusan Corp], and the centrifugal dehydrator was operated at the setting of 560 G. The metatitanic acid in the slurry state was filtered and washed with pure water (about 1 µS/cm) by directly injecting the pure water at a flow rate of 100 ml/min for 6 hours. After the injection of the water, the centrifugal dehydrator was operated at the setting of 1260 G for 20 minutes to obtain metatitanic acid in a cake state (hereafter referred to as "primarily washed cake"). A part of the primarily washed cake was collected and dried at 120°C and then analyzed using an ICP emission spectrometer. As a result of the analysis, the content of Na in terms of elemental sodium was 60 ppm by dry weight, and the content of sulfuric acid in terms of elemental sulfur was 1400 ppm by dry weight.

Next, while the stirring speed of the reactor having an internal capacity of 25 L and equipped with a stirrer was maintained at a constant value of 159 rpm, 2 L of pure water serving as a dispersion medium was added to the reactor, and 180 g of the primarily washed cake was further added. At this time, the pH of the mixture was 5.7, and the temperature inside the reactor was the same as the room temperature. In addition, 200 g of the 25 wt% aqueous solution of sodium hydroxide was added. At this time, the pH of the mixture was 12. Then, the temperature inside the reactor was raised to 40°C, and this state was maintained for 4 hours.

The pH controller installed in advance in the reactor was operated at this time. The pH controller adjusts pH by supplying the 68 wt% aqueous solution of nitric acid.

The pH set value of the pH controller was set to 6.1, and 103 g of the 68 wt% aqueous solution of nitric acid was supplied for 10 minutes, and this state was maintained for 1 hour. As a result, metatitanic acid in a further washed slurry state was obtained. The obtained metatitanic acid in a further desulfurized slurry state was supplied to a centrifugal dehydrator ["Compact Centrifugal Separator H-122" manufactured by Kokusan Corp], the centrifugal dehydrator was operated at the setting of 560 G. The metatitanic acid in the slurry state was filtered and washed with pure water (to 1 µS/cm) by directly injecting the pure water at a flow rate of 100 ml/min for 6 hours. After the injection of the water, the centrifugal dehydrator was operated at the setting of 1260 G for 20 minutes to obtain metatitanic acid in a cake state (hereafter referred to as "secondarily washed cake"). A part of the secondarily washed cake was collected and dried at 120°C and then analyzed using an ICP emission spectrometer. As a result of the analysis, the content of Na in terms of elemental sodium was 4000 ppm by dry weight, and the content of sulfuric acid in terms of elemental sulfur was 400 ppm by dry weight.

Furthermore, 13.46 g of the metatitanic acid in a cake state obtained as described above (the solid content concentration as TiO₂: 44.58 % by mass, the BET specific surface area: 347 m²/g, the content of sulfuric acid in terms of elemental sulfur: 400 ppm), 6 g of tungsten oxide powder (the BET specific surface area: 6.3 m²/g, made by Nippon Inorganic Colour & Chemical Co., Ltd.) and 40.54 g of water were mixed, and the obtained mixture was dispersed under the following conditions using a medium-stirring pulverizer ("4TSG-1/8" manufactured by Igarashi Machine Manufacturing Co., Ltd.) to obtain a photocatalyst dispersion liquid.
Medium: beads made of zirconia of 190 g having a diameter of 0.05 mm
Treatment temperature: 20°C
Treatment time: 4 hours
Number of revolutions: 2000 rpm

The average dispersed particle diameter of the photocatalyst dispersion liquid thus obtained was 108 nm, and the pH of the dispersion liquid was 4.8. Thixotropy and solid-liquid separation were not found in the photocatalyst dispersion liquid. When a part of the mixture before the dispersion treatment and a part of the dispersion liquid after the dispersion treatment were vacuum-dried to obtain solid contents and the X-ray diffraction spectra of the respective solid contents were measured and compared, it was found that the crystal form was a mixed phase of anatase titanium oxide and tungsten oxide, and that the crystal form was not changed by the dispersion treatment.

To the obtained photocatalyst dispersion liquid, water and an aqueous solution of hexachloroplatinate [H₂PtCl₆] were added to obtain a photocatalyst dispersion liquid. The solid content in the photocatalyst dispersion liquid was 5 parts by mass in 100 parts by mass of the photocatalyst dispersion liquid (the solid content concentration: 5 % by mass). Furthermore, the use amount of the hexachloroplatinate was 0.06 parts by mass in the 100 parts by mass of the total of the titanium oxide particles and the tungsten oxide particles in terms of platinum atom.

Next, 10 g of the photocatalyst dispersion liquid containing the hexachloroplatinate was poured into a 50 mL beaker. While the dispersion liquid was stirred, ultraviolet light from an ultrahigh pressure mercury lamp (lamp house: MPL-25101, ultrahigh pressure mercury lamp: USH-250BY, lamp power source: HB-25103BY, manufactured by Ushio Inc.) was irradiated to the dispersion liquid for 0.5 hours. Then, 0.5 g of methanol was added to the dispersion liquid, and the irradiation of light was performed further for 1 hour. Hence, the hexachloroplatinate was reduced to platinum, and the color of the dispersion liquid was changed from cream to gray. Thixotropy and solid-liquid separation were not found in the photocatalyst dispersion liquid containing platinum even after the irradiation of the ultraviolet light.

Moreover, when the photocatalytic activity (the decomposition of acetaldehyde) on the photocatalyst layer formed by using the obtained photocatalyst dispersion liquid containing platinum was evaluated, the first-order reaction rate constant was 0.76 h⁻¹_{.}

### (Comparison example 1)

13.95 g of the metatitanic acid in a solid (cake) state obtained in Example 1 (the solid content concentration as TiO₂: 43.0 % by mass, the BET specific surface area: 338 m²/g, the content of sulfuric acid in terms of elemental sulfur: 1800 ppm), 6 g of tungsten oxide powder (the BET specific surface area: 6.3 m²/g, made by Nippon Inorganic Colour & Chemical Co., Ltd.) and 40.05 g of water were mixed, and the obtained mixture was dispersed under the following conditions using a medium-stirring pulverizer ("4TSG-1/8" manufactured by Igarashi Machine Manufacturing Co., Ltd.) to obtain a photocatalyst dispersion liquid.
Medium: beads made of zirconia of 190 g having a diameter of 0.05 mm
Treatment temperature: 20°C
Treatment time: 4 hours
Number of revolutions: 2000 rpm

The average dispersed particle diameter of the photocatalyst dispersion liquid thus obtained was 163 nm, and the pH of the dispersion liquid was 4.7. Although solid-liquid separation was not found in the photocatalyst dispersion liquid, its viscosity was high and thixotropy was found, whereby the dispersion liquid was difficult to handle. When a part of the mixture before the dispersion treatment and a part of the dispersion liquid after the dispersion treatment were vacuum-dried to obtain solid contents and the X-ray diffraction spectra of the respective solid contents were measured and compared, it was found that the crystal form was a mixed phase of anatase titanium oxide and tungsten oxide, and that the crystal form was not changed by the dispersion treatment.

### (Comparison example 2)

14.04 g of the metatitanic acid in a solid (cake) state obtained in Example 1 (the solid content concentration as TiO₂: 42.7 % by mass, the BET specific surface area: 336 m²/g, the content of sulfuric acid in terms of elemental sulfur: 3100 ppm), 6 g of tungsten oxide powder (the BET specific surface area: 6.3 m²/g, made by Nippon Inorganic Colour & Chemical Co., Ltd.) and 39.96 g of water were mixed, and the obtained mixture was dispersed under the following conditions using a medium-stirring pulverizer ("4TSG-1/8" manufactured by Igarashi Machine Manufacturing Co., Ltd.) to obtain a photocatalyst dispersion liquid.
Medium: beads made of zirconia of 190 g having a diameter of 0.05 mm
Treatment temperature: 20°C
Treatment time: 4 hours
Number of revolutions: 2000 rpm

The average dispersed particle diameter of the photocatalyst dispersion liquid thus obtained was 662 nm, and the pH of the dispersion liquid was 4.4. Solid-liquid separation was found in the photocatalyst dispersion liquid, whereby the dispersion liquid was difficult to handle. When a part of the mixture before the dispersion treatment and a part of the dispersion liquid after the dispersion treatment were vacuum-dried to obtain solid contents and the X-ray diffraction spectra of the respective solid contents were measured and compared, it was found that the crystal form was a mixed phase of anatase titanium oxide and tungsten oxide, and that the crystal form was not changed by the dispersion treatment.

### (Example 2)

When the photocatalytic activity (the decomposition of formaldehyde) on the photocatalyst layer formed by using the photocatalyst dispersion liquid containing platinum obtained in Example 1 was evaluated, the first-order reaction rate constant was 2.22 h⁻¹_{.}

### (Example 3)

10.77 g of the metatitanic acid in a cake state obtained in Example 1 (the solid content concentration as TiO₂: 44.58 % by mass, the BET specific surface area: 347 m²/g, the content of sulfuric acid in terms of elemental sulfur: 400 ppm), 7.2 g of tungsten oxide powder (the BET specific surface area: 6.3 m²/g, made by Nippon Inorganic Colour & Chemical Co., Ltd.) and 42.03 g of water were mixed, and the obtained mixture was dispersed under the following conditions using a medium-stirring pulverizer ("4TSG-1/8" manufactured by Igarashi Machine Manufacturing Co., Ltd.) to obtain a photocatalyst dispersion liquid.
Medium: beads made of zirconia of 190 g having a diameter of 0.05 mm
Treatment temperature: 20°C
Treatment time: 4 hours
Number of revolutions: 2000 rpm

The average dispersed particle diameter of the photocatalyst dispersion liquid thus obtained was 102 nm, and the pH of the dispersion liquid was 4.1. Thixotropy and solid-liquid separation were not found in the photocatalyst dispersion liquid. When a part of the mixture before the dispersion treatment and a part of the dispersion liquid after the dispersion treatment were vacuum-dried to obtain solid contents and the X-ray diffraction spectra of the respective solid contents were measured and compared, it was found that the crystal form was a mixed phase of anatase titanium oxide and tungsten oxide, and that the crystal form was not changed by the dispersion treatment.

To the obtained photocatalyst dispersion liquid, water and an aqueous solution of hexachloroplatinate [H₂PtCl₆] were added to obtain a photocatalyst dispersion liquid. The solid content in the photocatalyst dispersion liquid was 5 parts by mass in 100 parts by mass of the photocatalyst dispersion liquid (the solid content concentration: 5 % by mass). Furthermore, the use amount of the hexachloroplatinate was 0.06 parts by mass in the 100 parts by mass of the total of the titanium oxide particles and the tungsten oxide particles in terms of platinum atom.

Next, 10 g of the photocatalyst dispersion liquid containing the hexachloroplatinate was poured into a 50 mL beaker. While the dispersion liquid was stirred, ultraviolet light from an ultrahigh pressure mercury lamp (lamp house: MPL-25101, ultrahigh pressure mercury lamp: USH-250BY, lamp power source: HB-25103BY, manufactured by Ushio Inc.) was irradiated to the dispersion liquid for 0.5 hours. Then, 0.5 g of methanol was added to the dispersion liquid, and the irradiation of light was performed further for 1 hour. Hence, the hexachloroplatinate was reduced to platinum, and the color of the dispersion liquid was changed from cream to gray. Thixotropy and solid-liquid separation were not found in the photocatalyst dispersion liquid containing platinum even after the irradiation of the ultraviolet light.

Moreover, when the photocatalytic activity (the decomposition of formaldehyde) on the photocatalyst layer formed by using the obtained photocatalyst dispersion liquid containing platinum was evaluated, the first-order reaction rate constant was 1.86 h⁻¹_{.}

### (Example 4)

16.15 g of the metatitanic acid in a cake state obtained in Example 1 (the solid content concentration as TiO₂: 44.58 % by mass, the BET specific surface area: 347 m²/g, the content of sulfuric acid in terms of elemental sulfur: 400 ppm), 4.8 g of tungsten oxide powder (the BET specific surface area: 6.3 m²/g, made by Nippon Inorganic Colour & Chemical Co., Ltd.) and 39.05 g of water were mixed, and the obtained mixture was dispersed under the following conditions using a medium-stirring pulverizer ("4TSG-1/8" manufactured by Igarashi Machine Manufacturing Co., Ltd.) to obtain a photocatalyst dispersion liquid.
Medium: beads made of zirconia of 190 g having a diameter of 0.05 mm
Treatment temperature: 20°C
Treatment time: 4 hours
Number of revolutions: 2000 rpm

The average dispersed particle diameter of the photocatalyst dispersion liquid thus obtained was 101 nm, and the pH of the dispersion liquid was 4.9. Thixotropy and solid-liquid separation were not found in the photocatalyst dispersion liquid. When a part of the mixture before the dispersion treatment and a part of the dispersion liquid after the dispersion treatment were vacuum-dried to obtain solid contents and the X-ray diffraction spectra of the respective solid contents were measured and compared, it was found that the crystal form was a mixed phase of anatase titanium oxide and tungsten oxide, and that the crystal form was not changed by the dispersion treatment.

To the obtained photocatalyst dispersion liquid, water and an aqueous solution of hexachloroplatinate [H₂PtCl₆] were added to obtain a photocatalyst dispersion liquid. The solid content in the photocatalyst dispersion liquid was 5 parts by mass in 100 parts by mass of the photocatalyst dispersion liquid (the solid content concentration: 5 % by mass). Furthermore, the use amount of the hexachloroplatinate was 0.06 parts by mass in the 100 parts by mass of the total of the titanium oxide particles and the tungsten oxide particles in terms of platinum atom.

Next, 10 g of the photocatalyst dispersion liquid containing the hexachloroplatinate was poured into a 50 mL beaker. While the dispersion liquid was stirred, the ultraviolet light from an ultrahigh pressure mercury lamp (lamp house: MPL-25101, ultrahigh pressure mercury lamp: USH-250BY, lamp power source: HB-25103BY, manufactured by Ushio Inc.) was irradiated to the dispersion liquid for 0.5 hours. Then, 0.5 g of methanol was added to the dispersion liquid, and the irradiation of light was performed further for 1 hour. Hence, the hexachloroplatinate was reduced to platinum, and the color of the dispersion liquid was changed from cream to gray. Thixotropy and solid-liquid separation were not found in the photocatalyst dispersion liquid containing platinum even after the irradiation of the ultraviolet light.

Moreover, when the photocatalytic activity (the decomposition of formaldehyde) on the photocatalyst layer formed by using the obtained photocatalyst dispersion liquid containing platinum was evaluated, the first-order reaction rate constant was 1.55 h⁻¹.

As this description may be embodied in several forms without departing from the spirit of essential characteristics thereof, the present embodiment is therefore illustrative and not restrictive, since the scope is defined by the appended claims rather than by the description preceding them, and all changes that fall within metes and bounds of the claims, or equivalence of such metes and bounds thereof are therefore intended to be embraced by the claims.

## Claims

1. A photocatalyst dispersion liquid, comprising:
titanium oxide particles which are obtainable by a sulfate process and having a content of sulfuric acid in terms of elemental sulfur of 1000 ppm or less by dry weight;
tungsten oxide particles; and
a dispersion medium for dispersing said titanium oxide particles and said tungsten oxide particles,
wherein the mass ratio of the titanium oxide particles to the tungsten oxide particles is from 1:8 to 8:1.

2. The photocatalyst dispersion liquid according to claim 1, wherein the titanium oxide particles are metatitanic acid particles.

3. The photocatalyst dispersion liquid according to claim 1 or 2, further comprising an electron-withdrawing substance or its precursor.

4. The photocatalyst dispersion liquid according to claim 3, wherein a precursor of the electron-withdrawing substance has been irradiated by light.

5. The photocatalyst dispersion liquid according to claim 3 or 4, wherein the electron-withdrawing substance or its precursor is one or more kinds of metals selected from the group consisting of Cu, Pt, Au, Pd, Ag, Fe, Nb, Ru, Ir, Rh and Co or a compound thereof.

6. The photocatalyst dispersion liquid according to any one of the preceding claims, wherein the titanium oxide particles have a BET specific surface area from 40 m²/g to 500 m²/g.

7. The photocatalyst dispersion liquid according to any one of the preceding claims, wherein the tungsten oxide particles have a BET specific surface area ranging from 2 m²/g to 100 m²/g.

8. The photocatalyst dispersion liquid according to any one of the preceding claims, wherein the titanium oxide particles and the tungsten oxide particles have an average dispersed particle diameter from 50 nm to 3 µm.

9. A photocatalyst functional product, comprising:
a substrate; and
a photocatalyst layer formed on a surface of the substrate using the photocatalyst dispersion liquid set forth in any one of the preceding claims.

10. A method for preparing a photocatalyst dispersion liquid, comprising:
a step of dispersing titanium oxide particles and tungsten oxide particles in a dispersion medium;
adding an electron-withdrawing substance or its precursor to the dispersion medium; and
where a precursor of an electron-withdrawing substance has been added, irradiating light on the precursor after the addition step.

11. A method according to claim 10 wherein the titanium oxide particles are obtainable by a sulfate process and have a content of sulfuric acid in terms of elemental sulfur of 1000 ppm or less by dry weight;
and wherein the mass ratio of the titanium oxide particles to the tungsten oxide particles is from 1:8 to 8:1.

12. A method according to claims 10 or 11 wherein the titanium oxide particles are metatitanic acid particles.
